Europäisches Patentamt

European Patent Office

Office européen des brevets

(19)

(11) **EP 0 748 443 B1**

(12) **EUROPÄISCHE PATENTSCHRIFT**

(45) Veröffentlichungstag und Bekanntmachung des Hinweises auf die Patenterteilung:
**03.02.1999  Patentblatt 1999/05**

(21) Anmeldenummer: **95936989.3**

(22) Anmeldetag: **28.11.1995**

(51) Int Cl.6: **G01N 27/419**, G01N 27/406

(86) Internationale Anmeldenummer:
**PCT/DE95/01685**

(87) Internationale Veröffentlichungsnummer:
**WO 96/20400 (04.07.1996 Gazette 1996/30)**

(54) **MESSFÜHLER ZUR BESTIMMUNG DES SAUERSTOFFGEHALTES IN GASGEMISCHEN**

SENSOR FOR DETERMINING THE OXYGEN CONTENT OF GAS MIXTURES

DETECTEUR PERMETTANT DE DETERMINER LA TENEUR EN OXYGENE DE MELANGES GAZEUX

(84) Benannte Vertragsstaaten:
**DE FR GB IT SE**

(30) Priorität: **28.12.1994  DE 4447033**

(43) Veröffentlichungstag der Anmeldung:
**18.12.1996  Patentblatt 1996/51**

(73) Patentinhaber: **ROBERT BOSCH GMBH**
**70442 Stuttgart (DE)**

(72) Erfinder:
* **FRIESE, Karl-Hermann**
  **D-71229 Leonberg (DE)**
* **GRÜNWALD, Werner**
  **D-70839 Gerlingen (DE)**

(56) Entgegenhaltungen:
**DE-A- 3 632 456        DE-A- 4 311 849**
**GB-A- 2 285 866        US-A- 4 440 621**
**US-A- 5 236 569**

## Beschreibung

Stand der Technik

Die Erfindung betrifft einen Meßfühler zur Bestimmung des Sauerstoffgehaltes in Gasgemischen, insbesondere in Abgasen von Verbrennungsmotoren, nach der Gattung des Hauptanspruchs. Ein gattungsgemäßer Meßfühler ist aus der DE 36 32 456 C2 bekannt, bei dem anstatt Atmosphärenluft als Bezugsgas bzw. Referenzgas zu verwenden, Sauerstoff aus dem zu messenden Gasgemisch in eine interne Bezugsgasquelle gepumpt wird. Dazu ist eine erste Pumpzelle und eine zweite Pumpzelle mit jeweils zwei Elektroden und ein Gasraum vorgesehen, wobei im Gasraum jeweils eine Elektrode der ersten und zweiten Pumpzelle angeordnet ist und der Gasraum über eine Diffusionsbarriere mit dem Gasgemisch in Verbindung steht. Die zweite Elektrode der ersten Pumpzelle ist mit der internen Bezugsgasquelle verbunden. Die zweite Elektrode der zweiten Pumpzelle ist dem Gasgemisch ausgesetzt. Mit der ersten Pumpzelle wird ständig unter der Wirkung eines Pumpstroms Sauerstoff aus dem Meßgasraum in die interne Bezugsgasquelle gepumpt. Die zweite Pumpzelle wird mittels einer bidirektionalen Regelung so betrieben, daß im Meßgasraum ein annähernd konstanter Sauerstoffpartialdruck durch Zu- oder Abpumpen von Sauerstoff entsteht. Die Pumpspannung der zweiten Pumpzelle wird mit einer konstanten Bezugsspannung verglichen. Anhand der Spannungsdiffernz wird der Pumpstrom bidirektional geregelt. Der Pumpstrom selbst dient als Maß des Sauerstoffgehaltes im Gasgemisch.

Vorteile der Erfindung

Der Meßfühler mit den kennzeichnenden Merkmalen des Hauptanspruchs hat den Vorteil, daß er ohne eine bidirektionale Regelung des Pumpstroms auskommt, wodurch die Auswerteelektronik vereinfacht werden kann.

Mit den in den Unteransprüchen aufgeführten Maßnahmen sind vorteilhafte Weiterbildungen des erfindungsgemäßen Sensors möglich. Besonders vorteilhaft ist es, die Betriebsspannung der zweiten Pumpzelle so einzustellen, daß bei $\lambda=1$ die resultierende Pumpspannung der zweiten Pumpzelle zu Null wird. Dadurch ist es möglich, daß die Gesammtspannung zwischen den Elektroden der ersten und zweiten Pumpzelle nicht über einen Wert ansteigt, der zur Elektrolytzersetzung führt. Eine Reduzierung der Anzahl der Anschlüsse für den Meßfühler wird erreicht, wenn die in der Bezugsgasquelle angeordneten Elektroden der ersten Pumpzelle und der zweiten Pumpzelle zu einer gemeinsamen Elektrode zusammengeführt sind. Besonders vorteilhaft ist ferner, die Bezugsgasquelle in eine poröse Heizerisolation zu legen und eine Druckausgleichsverbindung zur Luftatmosphäre herzustellen.

Zeichnung

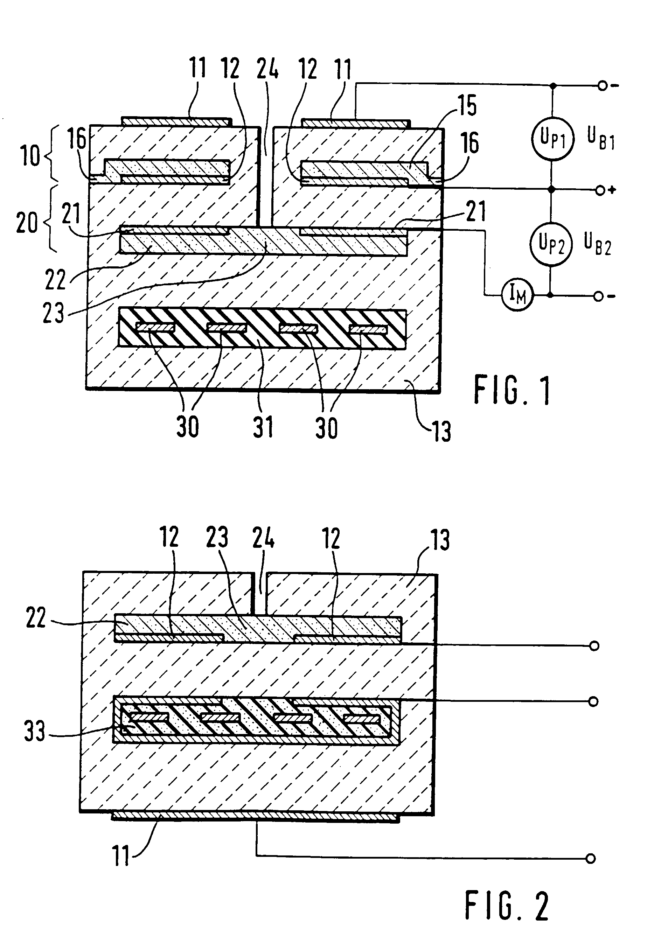

Zwei Ausführungsbeispiele der Erfindung sind in der Zeichnung dargestellt und in der nachfolgenden Beschreibung näher erläutert. Es zeigen Figur 1 einen Querschnitt eines ersten Ausführungsbeispiels eines erfindungsgemäßen Meßfühlers und Figur 2 einen Querschnitt eines zweiten Ausführungsbeispiels eines erfindungsgemäßen Meßfühlers.

Beschreibung der Ausführungsbeispiele

Der Meßfühler gemäß Figur 1 hat eine Referenzzelle 10 mit einer ersten Elektrode 11 und einer zweiten Elektrode 12, eine Meßzelle 20 mit einer dritten Elektrode 21 und einen Widerstandsheizer 30. Die Elektroden 11, 12, 21 sind mit einem sauerstoffionenleitenden Festelektrolytkörper 13 verbunden. Die Elektroden 11, 12, 21 bestehen beispielsweise aus Platin oder Platin-Cermet. Der Widerstandsheizer 30 ist mittels einer elektrischen Isolierung 31 in den Festelektrolytkörper 13 eingebettet und besteht beispielsweise ebenfalls aus dem Material der Elektroden. Die erste Elektrode 11 ist an der Außenseite des Festelektrolytkörpers 13 angeordnet und dem Gasgemisch unmittelbar ausgesetzt, wobei über die Elektrode 11 zusätzlich eine nicht eingezeichnete poröse Schutzschicht gelegt sein kann.

Der Festelektrolytkörper 13 ist aus mehreren, nicht näher dargestellten Festelektrolytfolien aufgebaut, zwischen denen die Elektroden 11, 12, 21, die Isolierung 31 und der Widerstandsheizer 30 als Schichten angeordnet sind. Die mit den Schichten versehenen Festelektrolytfolien werden zusammenlaminiert und gesintert. Die Herstellung eines derartigen planaren Sensorelements ist allgemein bekannt, so daß an dieser Stelle auf eine nähere Beschreibung verzichtet werden kann. Als Material für den Festelektrolytkörper 13 eignet sich besonders Zirkoniumoxid, das durch 2- und/oder 3-wertige Oxide mit ähnlichem Kationenradius wie der des 4-wertigen Zr-Kations stabilisiert ist, beispielsweise durch CaO oder $Y_2O_3$.

Im Festelektrolytkörper 13 befindet sich ein Meßgasraum 22, in dem die dritte Elektrode 21 angeordnet ist. Der Meßgasraum 22 ist mit einer Diffusionsbarriere 23 ausgeführt, die beispielsweise durch Ausfüllen des Meßgasraumes 22 mit einem porösen Material, beispielsweise mit Aluminiumoxid, gebildet wird. Zum Meßgasraum 22 hin führt ein Diffusionskanal 24, so daß das zu messende Gasgemisch über den Diffusionskanal 24 in den Meßgasraum 22 gelangen kann.

Der Festelektrolytkörper 13 enthält einen weiteren Gasraum 15 mit einer beispielsweise zum Gasgemisch führenden Druckausgleichsverbindung 16. Im Gasraum 15 ist die zweite Elektrode 12 angeordnet, über die Sauerstoff in den Gasraum 15 gepumpt wird, so daß sich im Gasraum 15 eine interne Bezugsgasquelle ausbildet. Zur Vermeidung eines Überdrucks im Gasraum 15 kann ein Teil des in den Gasraum 15 gepumpten Sauerstoffs über die Druckausgleichsverbindung 16 in das Gasgemisch entweichen. Die Druckausgleichsverbindung 16 ist dabei zweckmäßigerweise so ausgeführt, daß eine Rückdiffusion von oxidierbaren Gasbestandteilen in den Gasraum 15 vermieden wird.

Anstelle der Elektrode 12 können jedoch auch zwei einzelne Elektroden im Gasraum 15 angeordnet werden, wobei dann eine Elektrode der Referenzzelle 10 und die andere Elektrode der Meßzelle 20 zugeordnet ist. Der Gasraum 15 wird beispielsweise durch eine poröse Aluminiumoxidschicht hergestellt. Ferner ist es denkbar, die Poren von porösen Elektroden als Gasraum 15 zu nutzen.

Die Referenzzelle 10 und die Meßzelle 20 werden als Pumpzellen betrieben. Die Elektroden 11 und 12 der Referenzzelle 10 sind mit einer ersten Betriebspannung $U_{B1}$ und die Elektroden 12 und 21 der Meßzelle 20 mit einer zweiten Betriebspannung $U_{B2}$ beaufschlagt. Den Betriebsspannungen $U_{B1}$ und $U_{B2}$ wirkt eine Nernst-Spannung entgegen, die bei $\lambda<1$ etwa 900 mV, bei $\lambda=1$ etwa 450 mV und bei $\lambda>1$ etwa 30 mV beträgt. Die Betriebsspannung $U_{B1}$ ist so gepolt, daß die Elektrode 11 als Kathode und die Elektrode 12 als Anode wirkt, wodurch Sauerstoff von der Elektrode 11 zur Elektrode 12 gepumpt wird. Die Betriebsspannung $U_{B2}$ weist eine Polarität derart auf, daß im mageren Gasgemisch die Elektrode 21 als Kathode und die Elektrode 12 als Anode und im fetten Gasgemisch die Elektrode 12 als Kathode und die Elektrode 21 als Anode wirken. Das bedeutet, daß sich bei Gemischwechsel vom mageren ins fette Gemisch sich die Polarität der Elektroden umkehrt. Dies wird erreicht, indem die Betriebsspannung $U_{B2}$ auf den Wert der Nernst-Spannung bei $\lambda=1$ von beispielsweise 450 mV eingestellt wird.

Bedingung zum Betreiben des Meßfühlers ist, daß im Gasraum 15 stets ein höherer Sauerstoffpartialdruck herrscht als im Gasgemisch. Dazu wird die Betriebsspannung $U_{B1}$ auf einen Wert eingestellt, der gewährleistet, daß von der Referenzzelle 10 stets mehr Sauerstoff in den Gasraum 15 gepumpt wird als die Meßzelle 20 bei umgekehrter Polarität im fetten Gasgemisch aus dem Gasraum 15 heraus pumpen kann. Dieser Wert wird erreicht durch folgende Bedingung:

$$U_{B1} > 2U_{Nf} - U_{B2}$$

mit $U_{Nf}$ = Nernst-Spannung im fetten Gasgemisch

Im vorliegenden Ausführungsbeispiel wird die Betriebsspannung $U_{B2}$ auf 450 mV eingestellt. Danach muß die Betriebsspannung $U_{B1}$ mindestens 1350 mV betragen (2x900mV - 450 mVM = 1350 mV). Im vorliegenden Ausführungsbeispiel beträgt die Betriebsspannung $U_{B1}$ 1,6 V.

Die Betriebspannung $U_{B1}$ erzeugt eine erste Pumpspannung $U_{P1}$, von der ein konstanter Pumpstrom $I_P$ von beispielsweise 50 μA angetrieben wird. Mittels des Pumpstroms $I_P$ wird ständig Sauerstoff von der Elektrode 11 zur Elektrode 12 in den Gasraum 15 hinein gepumpt.

Der Meßfühler arbeitet wie folgt. Der Sauerstoffpartialdruck des zu messenden Gasgemisches stellt sich an der Elektrode 11 der Referenzzelle 10 und über die Diffusionsbarriere 23 an der Elektrode 21 der Meßzelle 20 ein. Bei magerem Gasgemisch ($\lambda>1$) wird aufgrund der wirkenden Pumpspannung $U_{P1}$ an der Elektrode 11 der Sauerstoff kathodisch reduziert und in Ionenform zur Elektrode 12 gepumpt und dort als Sauerstoff entladen. Im Gasraum 15 entsteht somit ein höherer Sauerstoffpartialdruck als im Gasgemisch. Die dabei entstehende Nernst-Spannung von etwa 30 mV wirkt der Betriebsspannung $U_{B1}$ von 1,6 V entgegen, so daß die resultierende Pumpspannung $U_{P1}$ mit 1570 mV nur geringfügig geringer ist als die Betriebsspannung $U_{B1}$. Die gleiche Nernst-Spannung von 30 mV wirkt ebenfalls der zweiten Betriebsspannung $U_{B2}$ entgegen. Die Pumpspannung $U_{P2}$ pumpt mit 420 mV ebenfalls Sauerstoff vom Meßgasraum 22 zum Gasraum 15. Dadurch fließt ein kathodischen Grenzstrom $I_M$, der als Maß für den Sauerstoffpartialdruck im Gasgemisch herangezogen wird.

Nähert sich der Sauerstoffpartialdruck im Abgas dem stöchiometrischen Kraftstoff-Luft-Verhältnis ($\lambda=1$), überlagert sich der ersten Betriebsspannung $U_{B1}$ und der zweiten Betriebsspannung $U_{B2}$ eine diesem Partialdruck entsprechende Nernst-Spannung von etwa 450 mV. Die Pumpspannung $U_{P1}$ wird dadurch auf einen Wert von etwa 1150 mV reduziert. Die Pumpspannung $U_{P2}$ wird zu Null. Dadurch fließt bei $\lambda=1$ kein Pumpstrom $I_M$.

Wechselt das Gasgemisch in den fetten Bereich ($\lambda<1$), wird der ersten Betriebsspannung $U_{B1}$ und der zweiten Betriebsspannung $U_{B2}$ eine dem Sauerstoffpartialdruck bei $\lambda<1$ entsprechende Nernst-Spannung von etwa 900 mV überlagert. Die erste Pumpspannung $U_{P1}$ wird auf 700 mV reduziert. Der zweiten Betriebsspannung $U_{B2}$ von 450 mV überlagern sich die 900 mV Nernst-Spannung ebenfalls, so daß sich die Polarität der Pumpspannung $U_{P2}$ umkehrt. Die Elektrode 12 wird somit zur Kathode und die Elektrode 21 zur Anode. Dadurch wird der Sauerstoff an der Elektrode 12 kathodisch reduziert und in Ionenform zur Elektrode 21 gepumpt und im Meßgasraum 22 entladen. Die aus der Spannungsdifferenz resultierende Pumpspannung $U_{P2}$ von 450 mV treibt somit einen anodischen Grenzstrom $I_M$ an. Der Grenzstrom $I_M$ fließ in die umgekehrte Richtung. Der Betrag des anodischen Grenzstroms $I_M$ gibt den Sauerstoffpartialdruck im Gasgemisch an. Da auch bei $\lambda<1$ die Pumpspannung $U_{P1}$ größer ist als die entgegengesetzt wirkende Pumpspannnung $U_{P2}$ wird von der Referenzzelle 10 mehr Sauerstoff in den Gasraum 15 hineingepumpt als von der Meßzelle 20 aus dem Gasraum 15 heraus. Dadurch bleibt der Sauerstoffpartialdruck im Gasraum 15 größer als im Gasgemisch.

Mit einer nicht dargestellte Auswerteschaltung wird die Stromrichtung und der Betrag des Grenzstromes $I_M$ erfaßt und einer nicht dargestellten Steuerelektronik zugeführt, mittels der das Kraftstoff-Luft-Verhältnis des Brennstoffgemisches eingeregelt wird. Der Meßfühler ist somit zur Bestimmung des Sauerstoffgehaltes für magere, neutrale und fette Gasgemische einsetzbar.

Ein zweites Ausführungsbeispiel der Erfindung geht aus Figur 2 hervor, bei dem im Festelektrolytkörper 13 eine poröse Heizerisolation 33 für den Widerstandsheizer 30 integriert ist. In der Heizerisolation 33 ist die zweite Elektrode 12 der Referenzzelle 10 untergebracht. Die poröse Heizerisolation 33 bildet somit den Gasraum 15. Zweckmäßig ist es, die Elektrode 12 bei diesem Ausführungsbeispiel derart großflächig in der Heizerisolation 33 auszubilden, daß sie sowohl der an der Außenfläche angeordneten Elektrode 11 als auch der im Meßgasraum 22 befindlichen Elektrode 21 zugewandt ist. Die Druckausgleichsverbindung für den Gasraum 15 ist in Figur 2 nicht dargestellt. Sie liegt jedoch am anschlußseitigen Ende des Meßfühlers, so daß der Gasraum 15 mit der Bezugsgasquelle nicht in das Gasgemisch, sondern zur Luftatmosphäre führt. Damit werden eventuelle Rückdiffusionen von Gasbestandteilen aus dem Gasgemisch in den Gasraum 15 vermieden. Der Betrieb des Meßfühlers gemäß Figur 2 erfolgt analog dem Meßfühler gemäß Figur 1.

**Patentansprüche**

1.  Meßfühler zur Bestimmung des Sauerstoffgehaltes in Gasgemischen, insbesondere in Abgasen von Verbrennungsmotoren, mit einer ersten elektrochemischen Pumpzelle und einer zweiten elektrochemischen Pumpzelle, mit einer internen Bezugsgasquelle und einem mit dem Gasgemisch in Verbindung stehenden Meßgasraum, mit Elektroden für die erste und die zweite Pumpzelle und mit einer ersten Pumpspannung für die erste Pumpzelle und einer zweiten Pumpspannung für die zweite Pumpzelle, wobei mittels der ersten Pumpspannung Sauerstoff in die Bezugsgasquelle gepumpt wird und die zweite Pumpspannung einen Pumpstrom antreibt, der als Maß des Sauerstoffgehaltes gemessen wird, dadurch gekennzeichnet, daß die erste Pumpspannung ($U_{P1}$) und die zweite Pumpspannung ($U_{P2}$) derart eingestellt sind, daß durch die erste Pumpspannung ($U_{P1}$) mehr Sauerstoff in die Bezugsgasquelle (15) hinein als durch die zweite Pumpspannung ($U_{P2}$) aus der Bezugsgasquelle (15) heraus gepumpt wird.

2.  Meßfühler nach Anspruch 1, dadurch gekennzeichnet, daß die erste Pumpzelle (10) mit einer ersten Betriebsspannung ($U_{B1}$) und die zweite Pumpzelle (20) mit einer zweiten Betriebsspannung ($U_{B2}$) beaufschlagt sind, so daß unter der Wirkung der entsprechenden Nernst-Spannungen die erste Pumpspannung ($U_{P1}$) stets größer ist als die zweite Pumpspannung ($U_{P2}$) bei einer gegenüber der ersten Pumpspannung ($U_{P1}$) umgekehrten Polarität.

3.  Meßfühler nach Anspruch 2, dadurch gekennzeichnet, daß die Betriebsspannung ($U_{B1}$) der ersten Pumpzelle (10) bemessen ist nach der Bedingung

$$U_{B1} > 2U_{Nf} - U_{B2},$$

mit $U_{Nf}$ = Nernst-Spannung im fetten Gasgemisch.

4.  Meßfühler nach Anspruch 2 oder 3, dadurch gekennzeichnet, daß die zweiten Betriebsspannung ($U_{B2}$) den Wert der Nernst-Spannung bei $\lambda=1$ aufweist, vorzugsweise 450 mV.

5.  Meßfühler nach Anspruch 1, dadurch gekennzeichnet, daß in der Bezugsgasquelle (15) eine Elektrode der ersten Pumpzelle (10) und eine Elektrode der zweiten Pumpzelle (20) angeordnet sind.

6.  Meßfühler nach Anspruch 5, dadurch gekennzeichnet, daß die in der Bezugsgasquelle (15) angeordneten Elektroden der ersten Pumpzelle (10) und der zweiten Pumpzelle (20) zu einer Elektrode (12) zusammengeführt sind.

7.  Meßfühler nach Anspruch 1, dadurch gekennzeichnet, daß die eine Elektrode (21) der zweiten Pumpzelle (20) im Meßgasraum (22) angeordnet ist und daß der Meßgasraum (22) über eine Diffusionsbarriere (23) mit dem Gasgemisch in Verbindung steht.

8.  Meßfühler nach Anspruch 1, dadurch gekennzeichnet, daß die Bezugsgasquelle (15) eine Druckausgleichsverbindung (16) aufweist, die zum Gasgemisch und/oder zur Luftatmosphäre führt.

9.  Meßfühler nach Anspruch 1, dadurch gekennzeichnet, daß die Bezugsgasquelle (15) von einer porösen Heizerisolation (33) gebildet ist.

**Claims**

1.  Sensor for determining the oxygen content in gas mixtures, in particular in exhaust gases of internal-combustion engines, having a first electrochemical pump cell and a second electrochemical pump cell, having an internal reference gas source and a measurement gas space in communication with the gas mixture, having electrodes for the first and second pump cells and having a first pump voltage for the first pump cell and a second pump voltage for the second pump cell, oxygen being pumped into the reference gas source by means of the first pump voltage, and the second pump voltage driving a pump current which is measured as a measure of the oxygen content, characterized in that the first pump voltage ($U_{P1}$) and the second pump voltage ($U_{P2}$) are set in such a way that more oxygen is pumped into the reference gas source (15) by the first pump voltage ($U_{P1}$) than is pumped out of the reference gas source (15) by the second pump voltage ($U_{P2}$).

2. Sensor according to Claim 1, characterized in that a first operating voltage ($U_{B1}$) is applied to the first pump cell (10), and a second operating voltage ($U_{B2}$) is applied to the second pump cell (20), so that, under the effect of the corresponding Nernst voltages, the first pump voltage ($U_{P1}$) is always greater than the second pump voltage ($U_{P2}$) with a reverse polarity to the first pump voltage ($U_{P1}$).

3. Sensor according to Claim 2, characterized in that the operating voltage ($U_{B1}$) of the first pump cell (10) is dimensioned according to the condition

$$U_{B1} > 2U_{Nf} - U_{B2};$$

with $U_{Nf}$ = Nernst voltage in a rich gas mixture.

4. Sensor according to Claim 2 or 3, characterized in that the second operating voltage ($U_{B2}$) has the value of the Nernst voltage at $\lambda=1$, preferably 450 mV.

5. Sensor according to Claim 1, characterized in that one electrode of the first pump cell (10) and one electrode of the second pump cell (20) are arranged in the reference gas source (15).

6. Sensor according to Claim 5, characterized in that the electrodes of the first pump cell (10) and of the second pump cell (20) which are arranged in the reference gas source (15) are combined to form one electrode (12).

7. Sensor according to Claim 1, characterized in that one electrode (21) of the second pump cell (20) is arranged in the measurement gas space (22), and in that the measurement gas space (22) is in communication with the gas mixture via a diffusion barrier (23).

8. Sensor according to Claim 1, characterized in that the reference gas source (15) has a pressure balance connection (16) which leads to the gas mixture and/or to the air atmosphere.

9. Sensor according to Claim 1, characterized in that the reference gas source (15) is formed by a porous heater insulation (33).

## Revendications

1. Capteur de mesure permettant de déterminer la teneur en oxygène dans des mélanges de gaz, en particulier dans des gaz d'échappement de moteurs à combustion interne, capteur qui comprend une première cellule électrochimique de pompage, et une deuxième cellule électrochimique de pompage, une source interne de gaz de référence et un espace pour le gaz de mesure se trouvant en liaison avec le mélange de gaz, des électrodes pour la première et pour la deuxième cellule de pompage, et une première tension de pompage pour la première cellule de pompage et une deuxième tension de pompage pour la deuxième cellule de pompage, de l'oxygène étant pompé au moyen de la première tension de pompage dans la source de gaz de référence, et la deuxième tension de pompage entraînant un courant de pompage, qui est mesuré comme mesure de la teneur en oxygène , caractérisé en ce que la première tension de pompage ($U_{p1}$) et la deuxième tension de pompage ($U_{p2}$) sont réglées de telle manière que davantage d'oxygène est pompé par la première tension de pompage ($U_{p1}$) et envoyé à la source de gaz de référence (15), comme par la deuxième tension de pompage ($U_{p2}$), l'oxygène est pompé de la source de gaz de référence (15).

2. Capteur de mesure selon la revendication 1, caractérisé en ce que la première cellule de pompage (10) est sollicitée par une première tension de fonctionnement ($U_{B1}$) et la deuxième cellule de pompage est sollicitée par une deuxième tension de fonctionnement ($U_{B2}$), de telle sorte que sous l'action des tensions correspondantes de Nernst la première tension de pompage ($U_{p1}$) est en permanence plus grande que la deuxième tension de pompage ($U_{p2}$), dans le cas d'une polarité inversée par rapport à la première tension de pompage ($U_{p1}$).

3. Capteur de mesure selon la revendication 2, caractérisé en ce que la tension de fonctionnement ($U_{B1}$) de la première cellule de pompage (10) est mesurée selon la condition suivante:

$$U_{B1} > 2U_{Nf} - U_{B2},$$

avec $U_{nf}$ = Tension de Nernst dans un mélange de gaz riche.

4. Capteur de mesure selon la revendication 2 ou 3,

caractérisé en ce que
la deuxième tension de fonctionnement ($U_{B2}$) présente la valeur de la tension de Nernst dans le cas ou $\lambda = 1$, à savoir de préférence 450 mV.

5. Capteur de mesure selon la revendication 1, caractérisé en ce qu'
on dispose dans la source de référence (15) une électrode de la première cellule de pompage (10) et une électrode de la deuxième cellule de pompage (20).

6. Capteur de mesure selon la revendication 5, caractérisé en ce que
l'on rassemble les électrodes, disposées dans la source de gaz de référence (15), de la première cellule de pompage (10) et de la seconde cellule de pompage (20) en une seule électrode (12).

7. Capteur de mesure selon la revendication 1, caractérisé en ce que

- l'une des électrodes (21) de la deuxième cellule de pompage (20) est disposée dans l'espace des gaz de mesure (23) et
- l'espace des gaz de mesure (22) est en liaison par l'intermédiaire d'une barrière de diffusion (23) avec le mélange de gaz.

8. Capteur de mesure selon la revendication 1, caractérisé en ce que
la source de gaz de référence (15) présente une liaison d'équilibrage de la pression (16) qui mène au mélange de gaz et/ou à l'air de l'atmosphère.

9. Capteur de mesure selon la revendication 1, caractérisé en ce que
la source de gaz de référence (15) est formée par une isolation poreuse de radiateur (33).

FIG. 1

FIG. 2